# EUROPÄISCHE PATENTSCHRIFT

(11) **EP 0 776 278 B1**
(45) Veröffentlichungstag und Bekanntmachung des Hinweises auf die Patenterteilung: **12.05.1999**
(21) Anmeldenummer: 95929722.7
(22) Anmeldetag: 30.08.1995
(51) Int. Cl.: B60P 1/48, B60P 1/64

(54) **VORRICHTUNG ZUM TRANSPORTIEREN VON WECHSELBEHÄLTERN**
DEVICE FOR TRANSPORTING INTERCHANGEABLE CONTAINERS
DISPOSITIF PERMETTANT DE TRANSPORTER DES CONTENANTS INTERCHANGEABLES

(30) Priorität: 30.08.1994 DE 4430573
(43) Veröffentlichungstag der Anmeldung: 04.06.1997
(73) Patentinhaber: Gergen, Hans Georg, D-66386 St Ingbert (DE); Gergen, Engelbert, D-66583 Spiesen-Elversberg (DE); Gergen, Ottmar, D-66386 St Ingbert (DE)
(72) Erfinder: Gergen, Hans Georg, D-66386 St Ingbert (DE); Gergen, Engelbert, D-66583 Spiesen-Elversberg (DE); Gergen, Ottmar, D-66386 St Ingbert (DE)
(74) Vertreter: Vièl, Christof, Dipl.-Ing.
(86) Internationale Anmeldenummer: DE9501161
(87) Internationale Veröffentlichungsnummer: WO9606753

(56) Entgegenhaltungen:
- WO-A-89/06611
- WO-A-95/21075
- DE-A- 1 455 635
- DE-A- 3 040 637
- DE-A- 3 738 884
- DE-U- 8 815 800
- FR-A- 2 676 691
- SE-B- 8 405 420

## Beschreibung

Die Erfindung betrifft eine Vorrichtung zum Transportieren von Wechselbehältern, bestehend aus einer verfahrbaren Transportvorrichtung und einer an der Transportvorrichtung angelenkten Wechselbehältererfassungs- und Schwenkvorrichtung, welche zwei im wesentlichen parallel zueinander angeordnete, im hinteren Bereich der Ladefläche der Transportvorrichtung angelenkte, um zum hinteren Rand der Ladefläche etwa parallel verlaufende Achsen verschwenkbare, in ihrer Länge verstellbare Arme aufweist, wobei der Wechselbehälter über an dessen Seite befindliche Angriffspunkte durch Angriffsorgane der Arme erfaßbar und schwenkbar ist

Derartige Vorrichtungen sind seit Jahren Stand der Technik und werden beispielsweise in der DE-A-42 11 211 beschrieben. Sie werden zum Transportieren von üblichen Wechselbehältern (Silos, Mulden, Containern, etc.), hier konkret von Silos mit zapfenartigen Angriffspunkten an der Seitenfläche, verwendet. Die Angriffsorgane der Arme sind dann so ausgebildet, daß die Zapfen des Silos wenigstens teilweise umgriffen werden können.

Derzeit werden praktisch alle neu hergestellten Silos mit derartigen Angriffspunkten an der Seitenfläche ausgestattet. Es gibt jedoch noch zahlreiche Silos, die über Angriffspunkte an der Oberseite betätigt werden und keine seitlichen Angriffspunkte aufweisen. Für diese Silos müssen daher noch mit der entsprechenden Wechselbehältererfassungs- und Schwenkvorrichtung versehene Fahrzeuge bereitgehalten werden, was mit hohen Kosten verbunden ist. Eine Alternative wäre die Umrüstung der Silos auf Angriffspunkte an der Seitenfläche; auch dies ist jedoch sehr aufwendig.

Es gibt noch weitere Arten der Angriffspunkte an Silos, beispielsweise sogenannten Mathis-Silos, für die wiederum andere Wechselbehältererfassungs- und Schwenkvorrichtungen erforderlich sind.

Schließlich eignen sich Absetzkipper nicht nur zum Transport von Silos, sondern auch von anderen Wechselbehältern, wie z.B. von Mulden oder Containern. Auch bei diesen Wechselbehältern liegen jeweils verschiedene Angriffspunkte vor.

Aus der DE-A-32 34 198 und der DE-A-39 22 811 sind Adapter bekannt, die an einer Mulde bzw. einem Container befestigt werden, um den Transport dieser Wechselbehälter mit an sich nicht dafür vorgesehenen Transportvorrichtungen zu ermöglichen. Das Befestigen der Adapter an den Behältern ist jedoch relativ langwierig, so daß für jeden zu transportierenden Behälter ein Adapter vorgesehen werden muß, was hohe Kosten verursacht.

Aufgabe der Erfindung ist es daher, eine Vorrichtung zum Transportieren von Wechselbehältern gemäß dem Oberbegriff zu schaffen, mit der auch Wechselbehälter transportiert werden können, die andere Angriffspunkte, z.B. lediglich Angriffspunkte an der Oberseite, aufweisen. Hierbei soll vermieden werden, daß jeder zu transportierende Wechselbehälter durch direktes Anbringen oder über einen Adapter mit entsprechenden Angriffspunkten versehen werden muß.

Diese Aufgabe wird erfindungsgemäß dadurch gelöst, daß ein über Mittel mit den Angriffsorganen der Arme verbindbarer Adapter vorgesehen ist, der Angriffsorgane zum Erfassen eines Wechselbehälters über an diesem befindliche andere Angriffspunkte aufweist.

Durch diese Maßnahme wird erstmals eine Vorrichtung zum Transport von Wechselbehältern bereitgestellt, mit der sowohl Wechselbehälter mit Angriffspunkten für die Wechselbehältererfassungs- und Schwenkvorrichtung an der Seite des Wechselbehälters als auch mit Angriffspunkten an der Oberseite oder an anderen Stellen des Wechselbehälters transportiert werden können. Der besondere Vorteil der Vorrichtung liegt darin, daß mit einer Transportvorrichtung beliebig viele verschiedene Wechselbehälter transportiert werden können, ohne daß an diesen Änderungen vorgenommen werden müßten bzw. ohne daß diese mit einem Adapter versehen werden müssen. Ohne Beeinträchtigung der normalen Transportmöglichkeiten eines Absetzkippers kann dieser nunmehr Behälter jeglicher Art befördern. Durch die Verlängerung der Arme ergeben sich zudem weitere Vorteile, z.B. die Möglichkeit des Absetzen von Wechselbehältern deutlich über der Fahrzeugebene, z.B. auf einer Ladebühne.

Eine Ausbildung der Erfindung besteht darin, daß der Adapter aus einem in etwa u-förmigen Grundteil besteht, an dessen Querschenkel ein in etwa senkrecht angeordneter Betätigungsarm angeordnet ist.

Hierbei kann der Betätigungsarm je nach Lage der Angriffspunkte des Wechselbehälters tatsächlich als Arm ausgebildet sein oder aber lediglich als kurzer Sockel für einen Haken.

Dadurch weist die Wechselbehältererfassungs- und Schwenkvorrichtung eine Form auf, die eine Anordung um die Konturen des Wechselbehälters ermöglicht.

Es liegt auch im Rahmen der Erfindung, daß der Adapter aus einem Grundteil mit Mitteln zum Verbinden des Adapters mit den Armen besteht, an dessen Querschenkel eine Verlängerung vorgesehen ist, die einen in etwa senkrecht zu der Verlängerung angeordneten Betätigungsarm aufweist.

Es kann sich als sinnvoll erweisen, daß der Adapter zumindest teilweise unterhalb des Wechselbehälters angeordnet ist.

Eine Weiterbildung der Erfindung ist dadurch gekennzeichnet, daß der Adapter unterhalb der Längsachse der in Ruhestellung befindlichen Arme ablegbar ist.

Dies ermöglicht, den Adapter, wenn dieser nicht benötigt wird, abzulegen und somit das Transportieren von Wechselbehältern mit seitlich angebrachten Angriffspunkten durchführen zu können. Aus der abgelegten Stellung kann der Adapter auch von dem Fahrzeug abgenommen werden, wenn er nicht benötigt wird.

Hierbei kann vorgesehen sein, daß der Adapter vor den Armen ablegbar ist.

Eine vorteilhafte Ausgestaltung besteht darin, daß der Adapter in Richtung der Längsachse der Transportvorrichtung verschiebbar ist.

Es ist auch erfindungsgemäß, daß Mittel zum Absenken und Anheben des Adapters vorgesehen sind.

Dies erleichtert das Hochfahren des Adapters in die Längsachse der Arme und das Ablegen nach Gebrauch.

Zweckmäßig ist es auch, daß die Länge des Adapters veränderbar ist.

Es ist vorteilhaft, daß der Adapter in der Ebene des Grundteils und/oder in der Ebene des Betätigungsarms schwenkbar ist.

Es kann vorgesehen sein, daß der Querschenkel und/oder der Betätigungsarm drehbar ist.

Erfindungsgemäß ist auch, daß in dem Grundteil, dem Querschenkel oder der Verlängerung Hakenfinger als Angriffsorgane zum Erfassen eines Wechselbehälters vorgesehen sind.

Somit können auch sogenannte Mathis-Silos transportiert werden.

Die Hakenfinger können verfahrbar, klappbar oder abnehmbar sein.

Eine Ausbildung der Erfindung besteht darin, daß die Mittel zum Verbinden des Adapters mit den Armen als Aufnahmen für die Angriffsorgane am Ende der Arme ausgebildet sind.

Somit kann der Adapter mit den ohnehin vorhandenen Angriffsorganen der Arme aufgenommen werden.

Weiterhin ist vorgesehen, daß das Grundteil unterhalb der Ebene der Aufnahmen für die Angriffsorgane am Ende der Arme angeordnet ist.

Schließlich kann es zweckmäßig sein, daß der Adapter zum Fahrzeugende hin verlängert ist und Mittel zum Anlenken des Adapters an der Ladebrücke vorgesehen sind.

Im folgenden wird die Erfindung anhand von Zeichnungen beschrieben. Es zeigen
- Fig. 1: eine schematische Darstellung einer erfindungsgemäßen Vorrichtung,
- Fig. 2: eine Seitenansicht eines längenverstellbaren Adapters und
- Fig. 3: eine Draufsicht auf diesen Adapter,
- Fig. 4: eine Seitenansicht eines schwenkbaren Adapters und
- Fig. 5: eine Draufsicht auf diesen Adapter.
- Fig. 6: ein weiteres Beispiel für einen erfindungsgemäßen Adapter in Seitenansicht und
- Fig. 7: eine Draufsicht auf diesen Adapter.

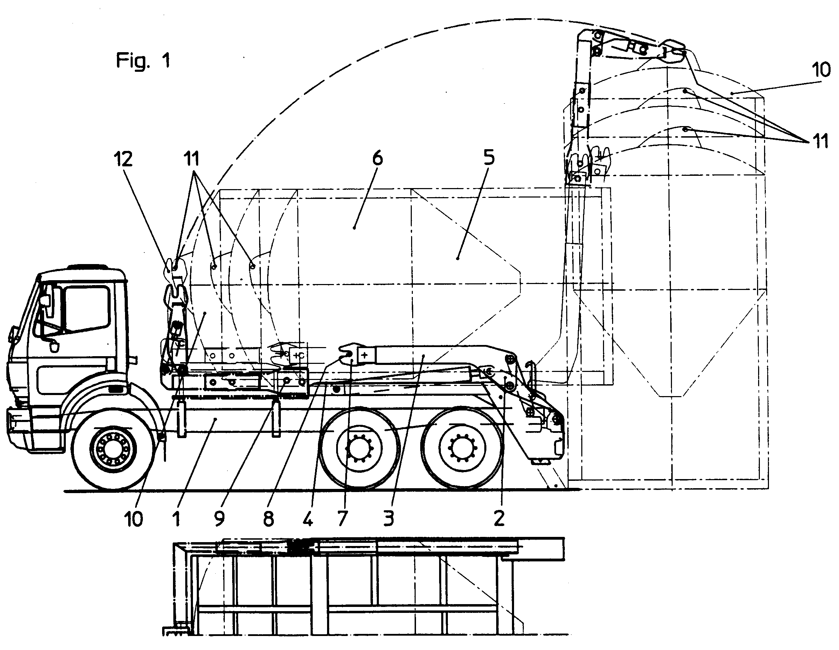

Wie in Fig. 1 dargestellt, umfaßt die erfindungsgemäße Vorrichtung ein Transportfahrzeug 1, das am hinteren Ende der Ladefläche eine Wechselbehältererfassungs- und Schwenkvorrichtung 2 aufweist. Diese Wechselbehältererfassungs- und Schwenkvorrichtung 2 besteht aus zwei im wesentlichen zueinander parallel angeordneten Armen 3, die im hinteren Bereich der Ladefläche 4 angelenkt sind und um zum hinteren Rand der Ladefläche 4 etwa parallele Achsen verschwenkbar sind. Diese Arme 3 ermöglichen das Aufnehmen bzw. das Absetzen eines Wechselbehälters 5, der im folgenden in Form eines Silos 5 beschrieben wird. Hierzu sind die Arme 3 in ihrer Länge verstellbar, was beispielsweise durch Teleskopzylinder erreicht werden kann. Am Ende der Arme 3 sind Angriffsorgane 7 angeordnet, die beispielsweise als Haken oder gabelförmige Klauen ausgebildet sein können.

Silos 5 neuerer Bauart weisen an ihrer Seitenfläche 6 Angriffspunkte 8 auf, die beispielsweise zapfenartig ausgebildet sind. Die Angriffsorgane 7 können in Verbindung mit den Angriffspunkten 8 des zu transportierenden Silos 5 gebracht werden, beispielsweise dadurch, daß sie zapfenartig ausgebildete Angriffspunkte 8 zumindest teilweise umgreifen.

Bei Anheben der so den Silo 5 erfassenden Arme 3 wird der Silo 5 von der horizontalen in die vertikale Lage verschwenkt und kann dann abgestellt werden.

Die erfindungsgemäße Vorrichtung weist zudem einen Adapter 9 auf, der mit den Armen 3 über geeignete Mittel 14 verbunden werden kann. Dieser Adapter 9 ist so ausgebildet, daß er eine Verlängerung der Arme 3 darstellt, die bis zu an der Oberseite 10 des Silos 5 angeordneten Angriffspunkten 11 des Silos 5 reicht und diesen über weitere Angriffsorgane 12 an Angriffspunkten 11 erfassen kann. Der Adapter 9 kann über geeignete Mittel 14, 15 zum Verbinden des Adapters 9 mit den Armen 3 fest mit diesen verbunden werden, was beispielsweise durch ein Einfahren der an den Armen 3 befindlichen Angriffsorgane 7 in eine entsprechend ausgebildete Aufnahme 14 des Adapters 9 erfolgen kann, wobei beispielsweise in Endstellung ein Einrasten erfolgt.

Mit einer derartigen Vorrichtung können somit beispielsweise Silos 5 alter Bauweise mit Angriffspunkten 11 an der Oberseite 10 und Silos 5 neuerer Bauweise mit Angriffspunkten 8 an der Seitenfläche 6 transportiert und geschwenkt werden. Selbstverständlich können auch Silos 5, die beide Sorten Angriffspunkte 8, 11 aufweisen, mit dieser Vorrichtung transportiert und geschwenkt werden, was dann von Vorteil ist, wenn aus bestimmten Gründen die Verwendung einer Gruppe von Angriffspunkten 8, 11 nicht in Frage kommt, z.B. weil diese zerstört sind. Entsprechendes gilt für andere Wechselbehälter.

Wie in Fig. 1 angedeutet, kann der Adapter 9 abgesenkt werden, was beispielsweise hydraulisch erfolgen kann. Wird er nicht benötigt, wird der Adapter 9 vorzugsweise unterhalb der Längsachse der Arme 3 vor diesen aufbewahrt. Bei Bedarf wird er aus dieser Stellung wieder in die Längsachse der Arme 3 hochgefahren und kann somit durch Vorfahren der Arme 3 aufgenommen werden. Dadurch kann der Adapter 9 beim Transportieren von Silos 5 neuerer Bauart an einer Stelle untergebracht werden, wo er nicht stört. Selbstverständlich ist es auch möglich, den Adapter 9 so zu befestigen, daß er ganz vom Transportfahrzeug 1 abgenommen werden kann und nur bei Bedarf mitgeführt wird.

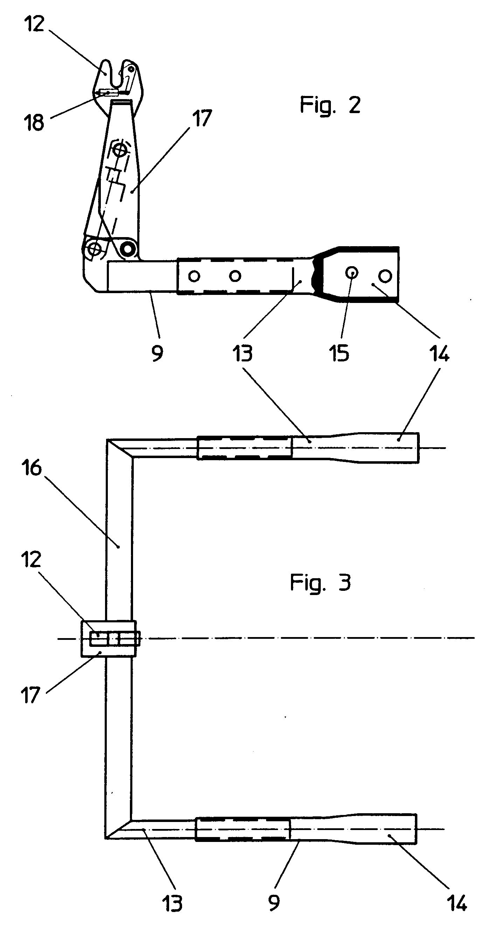

Fig. 2 und 3 zeigen schematische, beispielhafte Darstellungen eines erfindungsgemäßen Adapters 9, der zudem längenverstellbar ist. Der Adapter 9 besteht aus einem etwa u-förmigen Grundteil 13, das an den beiden Enden Mittel 14, 15 zum Verbinden des Adapters 9 mit den Armen 3 aufweist. Beispielsweise kann, wie hier dargestellt, eine Aufnahme 14 zum Verbinden des Adapters 9 mit den Angriffsorganen 7 der Arme 3 vorgesehen sein, die einen Zapfen 15 aufweist, der von den Angriffsorganen 7 zumindest teilweise umgriffen wird. In der Mitte des Querschenkels 16 des Grundgestells 13 ist etwa senkrecht zu dem Grundgestell 13 ein Betätigungsarm 17 angeordnet, an dessen Ende weitere Angriffsorgane 12 angeordnet sind, die zum Eingriff mit Angriffspunkten 11 an der Oberseite 10 eines Silos 5 gebracht werden können. Je nach Lage der Angriffspunkte 11 des Silos 5 kann der Betätigungsarm 17 tatsächlich als länglicher Arm ausgebildet sein oder aber als kurzer Sockel, auf dem direkt die Angriffsorgane 12, z.B. ein Haken, angeordnet sind. Über einen Hydraulikzylinder 18 können diese Angriffsorgane 12 betätigt werden. Wie angedeutet, kann der Adapter im Bereich des Grundteils 13 und eventuell (hier nicht dargestellt) im Bereich des Betätigungsarms 17 längenverstellbar sein und verschiebbar sein. Der Adapter 9 kann weitere Lastaufnahmemittel, z.B. Ketten, Haken, Ösen, Seile etc. aufweisen, wodurch der Transport von Wechselbehältern 5 jeglicher Art möglich wird.

Zwischen den beiden parallelen Schenkeln des Grundteils 13 können Mittel zum Abstützen eines Silos 5, z.B. abnehmbare elastische Bänder, vorgesehen sein.

Selbstverständlich kann der Betätigungsarm 17 auch aus zwei schräg von den Enden der U-Schenkel zur Mitte des Querschenkels16 zusammenlaufenden Armen gebildet werden, was hier nicht dargestellt ist.

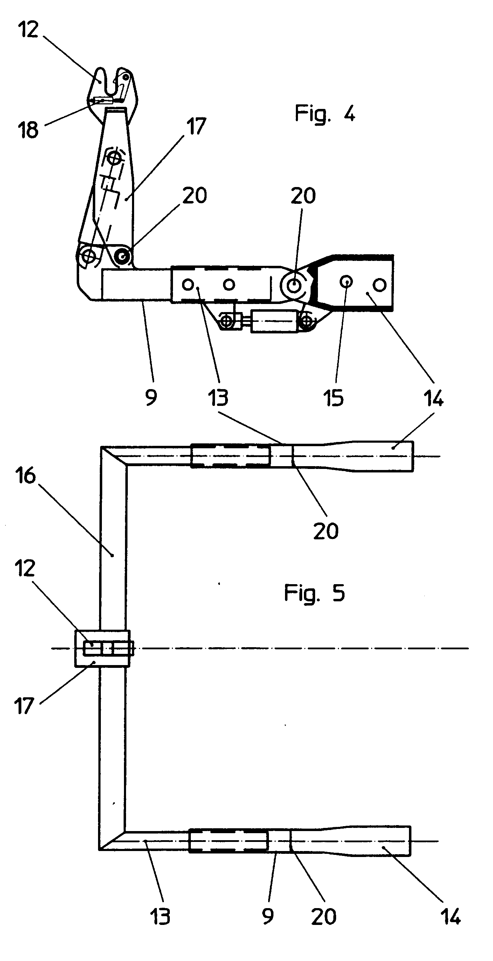

In den Fig. 4 und 5 ist eine weitere Ausführung eines Adapters dargestellt, der Gelenke 20 aufweist, um die das Grundteil 13 und/oder der Betätigungsarm 17 geschwenkt werden können. Der Querschenkel 16 und/oder der Betätigungsarm 17 können auch drehbar sein.

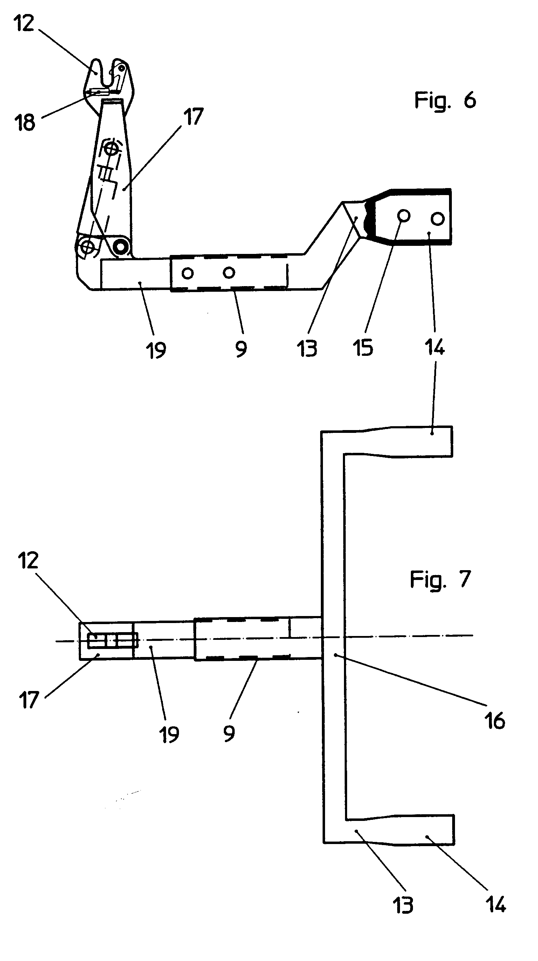

Fig. 6 und 7 zeigen schließlich einen Adapter, bei dem das Grundteil 13 an seinem Querschenkel 16 eine Verlängerung 19 aufweist, an deren Ende ein senkrecht zu der Ebene der Verlängerung 19 angeordneter Betätigungsarm 17 angeordnet ist.

Insbesondere bei dieser Variante des Adapters 9 ist es sinnvoll, daß dieser zumindest teilweise unterhalb der Wechselbehälterebene angeordnet ist. Dies kann bei allen Varianten dadurch erreicht werden, daß das Grundteil 13 unterhalb der Ebene der Aufnahmen 14 für die Angriffsorgane 7 am Ende der Arme 3 angeordnet ist. So kann das Grundteil 13 unten an die Aufnahmen 14 angesetzt oder über schräg verlaufende Schenkel mit den Aufnahmen 14 verbunden sein. Selbstverständlich können auch bei dieser Variante der Adapter 9 wie die in den Fig. 2 bis 5 beschriebenen Adapter 9 teleskopierbar und schwenkbar sein.

Weiterhin ist es möglich, daß der Adapter 9 im Bereich des Grundteils 13, des Querschenkels 16 und/oder der Verlängerung 19 bewegliche Hakenfinger (nicht dargestellt) aufweist, die in entsprechende, beispielsweise taschenförmige, Angriffspunkte eines Silos 5 (sog. Mathis-Silos) eingreifen können. Diese Hakenfinger können in dem Grundteil 13 bzw. der Verlängerung 19 verfahrbar sein. Weiterhin ist es möglich, daß diese Hakenfinger klappbar oder abnehmbar sind.

Schließlich kann vorgesehen sein, daß der Adapter 9 zum Fahrzeugende hin verlängert ist und Mittel zum Anlenken des Adapters 9 an der Ladebrücke vorgesehen sind.

## Patentansprüche

1. Vorrichtung zum Transportieren von Wechselbehältern (5), bestehend aus einer verfahrbaren Transportvorrichtung (1) und einer an der Transportvorrichtung (1) angelenkten Wechselbehältererfassungs- und Schwenkvorrichtung (2), welche zwei im wesentlichen parallel zueinander angeordnete, im hinteren Bereich der Ladefläche (4) der Transportvorrichtung (1) angelenkte, um zum hinteren Rand der Ladefläche (4) etwa parallel verlaufende Achsen verschwenkbare, in ihrer Länge verstellbare Arme (3) aufweist, wobei ein Wechselbehälter (5) über an dessen Seite befindliche Angriffspunkte durch Angriffsorgane (7) der Arme (3) erfaßbar und schwenkbar ist, **dadurch gekennzeichnet**, daß ein über Mittel (14) mit den Angriffsorganen (7) der Arme (3) verbindbarer Adapter (9) vorgesehen ist, der Angriffsorgane (12) zum Erfassen eines Wechselbehälters (5) über an diesem befindliche andere Angriffspunkte (11) aufweist.

2. Vorrichtung gemäß Anspruch 1, **dadurch gekennzeichnet**, daß der Adapter (9) aus einem in etwa u-förmigen Grundteil (13) besteht, an dessen Querschenkel (16) ein in etwa senkrecht zu dem Grundteil (13) angeordneter Betätigungsarm (17) mit Angriffsorganen (12) zum Erfassen eines Wechselbehälters (5) angeordnet ist.

3. Vorrichtung gemäß Anspruch 1, **dadurch gekennzeichnet**, daß der Adapter (9) aus einem Grundteil (13) mit Mitteln (14) zum Verbinden des Adapters (9) mit den Armen (3) besteht, an dessen Querschenkel (16) eine Verlängerung (19) vorgesehen ist, die einen in etwa senkrecht zu der Verlängerung (19) angeordneten Betätigungsarm (17) mit Angriffsorganen (12) zum Erfassen eines Wechselbehälters (5) aufweist.

4. Vorrichtung gemäß einem der Ansprüche 1 bis 3, **dadurch gekennzeichnet**, daß der Adapter (9) zumindest teilweise unterhalb des Wechselbehälters (5) angeordnet ist.

5. Vorrichtung gemäß einem der Ansprüche 1 bis 4, **dadurch gekennzeichnet**, daß der Adapter (9) unterhalb der Längsachse der in Ruhestellung befindlichen Arme (3) ablegbar ist.

6. Vorrichtung gemäß Anspruch 5, **dadurch gekennzeichnet**, daß der Adapter (9) vor den Armen (3) ablegbar ist.

7. Vorrichtung gemäß einem der Ansprüche 1 bis 6, **dadurch gekennzeichnet**, daß der Adapter (9) in Richtung der Längsachse der Transportvorrichtung verschiebbar ist.

8. Vorrichtung gemäß einem der Ansprüche 1 bis 7, **dadurch gekennzeichnet**, daß Mittel zum Absenken und Anheben des Adapters (9) vorgesehen sind.

9. Vorrichtung gemäß einem der Ansprüche 1 bis 8, **dadurch gekennzeichnet**, daß die Länge des Adapters (9) veränderbar ist.

10. Vorrichtung gemäß einem der Ansprüche 1 bis 9, **dadurch gekennzeichnet**, daß der Adapter (9) in der Ebene des Grundteils (13) und/oder in der Ebene des Betätigungsarms (17) schwenkbar ist.

11. Vorrichtung gemäß einem der Ansprüche 1 bis 10, **dadurch gekennzeichnet**, daß der Querschenkel (16) und/oder der Betätigungsarm (17) drehbar ist.

12. Vorrichtung gemäß einem der Ansprüche 1 bis 11, **dadurch gekennzeichnet**, daß in dem Grundteil (13), dem Querschenkel (16) oder der Verlängerung (19) Hakenfinger als Angriffsorgane zum Erfassen eines Wechselbehälters (5) vorgesehen sind.

13. Vorrichtung gemäß Anspruch 12, **dadurch gekennzeichnet**, daß die Hakenfinger verfahrbar und/oder klappbar sind.

14. Vorrichtung gemäß einem der Ansprüche 12 oder 13, **dadurch gekennzeichnet**, daß die Hakenfinger abnehmbar sind.

15. Vorrichtung gemäß Anspruch 1, **dadurch gekennzeichnet**, daß die Mittel zum Verbinden des Adapters (9) mit den Armen (3) als Aufnahmen (14) für die Angriffsorgane (7) am Ende der Arme (3) ausgebildet sind.

16. Vorrichtung gemäß Anspruch 15, **dadurch gekennzeichnet**, daß das Grundteil (13) unterhalb der Ebene der Aufnahmen (14) für die Angriffsorgane (7) am Ende der Arme (3) angeordnet ist.

17. Vorrichtung gemäß Anspruch 16, **dadurch gekennzeichnet**, daß der Adapter (9) mm Fahrzeugende hin verlängert ist und Mittel zum Anlenken des Adapters (9) an der Ladebrücke vorgesehen sind.

## Claims

1. A device for the transport of interchangeable containers (5), consisting of a mobile transport device (1) and a grasping and slewing device (2) which is hinged to the transport device (1) and has two arms (3) of adjustable length that are hinged - essentially parallel to one another - in the rear portion of the loading area (4) of the transport device 1 and are slewable about two approximately parallel axes running to the rear edge of the loading zone (4), an interchangeable container (5) with lateral gripping points being graspable at these points by gripping components (7) of the arms (3), and being slewable, **characterized in that** an adapter (9) is provided that is connectable by way of means (14) with the gripping components (7) of the arms (3), said adapter having gripping components (12) for grasping an interchangeable container (5) at other gripping points (11) located thereon.

2. The device of claim 1, **characterized in that** the adapter (9) consists of an approximately u-shaped basic portion (13), the transverse leg (16) of which is provided with an actuating arm (17) that is approximately perpendicular to the basic portion (13) and has gripping components (12) for grasping an interchangeable container (5).

3. The device of claim 1, **characterized in that** the adapter (9) consists of a basic portion (13) with means (14) for connecting the adapter (9) with the arms (3), the transverse leg (16) of said basic portion being provided with an extension (19) which exhibits an actuating arm (17) that is approximately perpendicular to the extension (19) and has gripping components (12) for grasping an interchangeable container (5).

4. A device according to one of claims 1 to 3, **characterized in that** the adapter (9) is located, at least in part, underneath the interchangeable container (5).

5. A device according to one of claims 1 to 4, **characterized in that** the adapter (9) can be stowed away underneath the longitudinal axis of the arms (3) in their non-operative position.

6. The device of claim 5, **characterized in that** the adapter (9) can be disconnected from the arms (3).

7. A device according to one of claims 1 to 6, **characterized in that** the adapter (9) is slidable in the direction of the longitudinal axis of the transport device.

8. A device according to one of claims 1 to 7, **characterized in that** means are provided for raising and lowering the adapter (9).

9. A device according to one of claims 1 to 8, **characterized in that** the length of the adapter (9) is adjustable.

10. A device according to one of claims 1 to 9, **characterized in that** the adapter (9) is slewable in the plane of the basic portion (13) and/or in the plane of the actuating arm (17).

11. A device according to one of claims 1 to 10, **characterized in that** the transverse leg (16) and/or the actuating arm (17) is rotatable.

12. A device according to one of claims 1 to 11, **characterized in that** hook elements are provided in the basic portion (13), the transverse leg (16) or the extension (19) as gripping components for grasping an interchangeable container (5).

13. The device of claim 12, **characterized in that** the hook elements are movable and/or foldable.

14. A device according to claim 12 or 13, **characterized in that** the hook elements can be removed.

15. The device of claim 1, **characterized in that** the means for connecting the adapter (9) with the arms (3) are designed as receiving elements (14) for the gripping components (7) at the end of the arms (3).

16. The device of claim 15, **characterized in that** the basic portion (13) is located below the plane of the receiving elements (14) for the gripping components (7) at the end of the arms (3).

17. The device of claim 16, **characterized in that** the adapter (9) is extended to the end of the vehicle and means are provided for hinging the adapter (9) to the loading ramp.

## Revendications

1. Dispositif pour le transport de conteneurs interchangeables (5), composé d'un dispositif de transport pouvant être conduit (1) et d'un dispositif de préhension et de basculement (2) du conteneur interchangeable articulé au dispositif de transport (1), ledit dispositif de préhension et de basculement étant équipé de deux bras (3) pratiquement parallèles entre eux, positionnés sur la partie arrière de la plate-forme de chargement (4) du dispositif de transport (1), pouvant basculer autour d'axes pratiquement parallèles au bord arrière de la plate-forme de chargement (4) et modifiables dans leur longueur, des organes de prise (7) des bras (3) pouvant saisir un conteneur interchangeable (5) par les points de saisie situés sur ses côtés et le basculer, **caractérisé en ce qu**'il est prévu un adaptateur (9) pouvant être relié par des moyens (14) aux organes de prise (7) des bras (3), ledit adaptateur étant pourvu d'organes de prise (12) destinés à saisir un conteneur interchangeable (5) par d'autres points de saisie (11) situés sur celui-ci.

2. Dispositif selon la revendication 1, **caractérisé en ce que** l'adaptateur (9) est composé d'un élément de base (13) en forme approximative de U sur la partie transversale (16) duquel est disposé pratiquement perpendiculairement à l'élément de base (13) un bras de manoeuvre (17) pourvu d'organes de saisie (12) destinés à saisir un conteneur interchangeable (5).

3. Dispositif selon la revendication 1, **caractérisé en ce que** l'adaptateur (9) est composé d'un élément de base (13) pourvu de moyens (14) destinés à relier l'adaptateur (9) aux bras (3), et sur la partie transversale (16) duquel est prévue une rallonge (19) pourvue d'un bras de manoeuvre (17) pratiquement perpendiculaire à la rallonge (19) et équipé d'organes de saisie (12) destinés à saisir un conteneur interchangeable (5).

4. Dispositif selon l'une des revendications 1 à 3, **caractérisé en ce que** l'adaptateur (9) peut être au moins en partie rangé au-dessous du conteneur interchangeable (5).

5. Dispositif selon l'une des revendications 1 à 4, **caractérisé en ce que** l'adaptateur (9) peut être déposé au-dessous des axes longitudinaux des bras (3) lorsqu'ils se trouvent en position de repos.

6. Dispositif selon la revendication 5, **caractérisé en ce que** l'adaptateur (9) peut être déposé devant les bras (3).

7. Dispositif selon l'une des revendications 1 à 6, **caractérisé en ce que** l'adaptateur (9) peut être déplacé dans la direction de l'axe longitudinal du dispositif de transport.

8. Dispositif selon l'une des revendications 1 à 7, **caractérisé en ce que** des moyens sont prévus pour la montée et la descente de l'adaptateur (9).

9. Dispositif selon l'une des revendications 1 à 8, **caractérisé en ce que** la longueur de l'adaptateur (9) est variable.

10. Dispositif selon l'une des revendications 1 à 9, **caractérisé en ce que** l'adaptateur (9) peut être basculé dans le plan de l'élément de base (13) et / ou dans le plan du bras de manoeuvre (17).

11. Dispositif selon l'une des revendications 1 à 10, **caractérisé en ce que** la partie transversale (16) et / ou le bras de manoeuvre (17) peut pivoter.

12. Dispositif selon l'une des revendications 1 à 11, **caractérisé en ce que**, dans l'élément de base (13), la partie transversale (16) ou la rallonge (19), des crochets pivotants sont prévus comme organes de saisie destinés à saisir un conteneur interchangeable (5).

13. Dispositif selon la revendication 12, **caractérisé en ce que** les crochets pivotants sont déplaçables et / ou repliables.

14. Dispositif selon l'une des revendications 12 ou 13, **caractérisé en ce que** les crochets pivotants peuvent être enlevés.

15. Dispositif selon la revendication 1, **caractérisé en ce que** les moyens destinés à relier l'adaptateur (9) aux bras (3) sont formés de logements (14) pour les organes de saisie (7) situés au bout des bras (3).

16. Dispositif selon la revendication 15, **caractérisé en ce que** l'élément de base (13) est positionné sous le plan des logements (14) pour les organes de saisie (7) situés au bout des bras (3).

17. Dispositif selon la revendication 16, **caractérisé en ce que** l'adaptateur (9) est prolongé vers l'arrière du véhicule et que des moyens sont prévus pour l'articulation de l'adaptateur (9) au pont de chargement.
